# EUROPEAN PATENT APPLICATION

(11) **EP 0 773 675 A2**
(43) Date of publication of application: **14.05.1997**
(21) Application number: 96402329.5
(22) Date of filing: 31.10.1996
(51) Int. Cl.: H04N 5/445

(54) **Circuit for mixing of video and OSD signals**

(30) Priority: 09.11.1995 GB 9523011
(71) Applicant: THOMSON multimedia S.A., 92050 Paris La Défense Cedex 66 (FR)
(72) Inventor: Chin, Yan Fat, Singapour 2365 (SG)
(74) Representative: Brykman, Georges

(57) **Abstract**

When OSD information and video pictures are displayed on a single screen at the same time, it is convenient for a viewer that both signals have the same brightness. To achieve this, both OSD signals and video signals must have the same DC voltage level. To provide both the OSD signal and the video signal with such a common DC voltage level, a clamping circuit between both lines is provided. In the embodiment the clamping circuit is realized by a combination of a voltage divider, a pair of diodes and a capacitor, but any other commercially available clamping circuit can be used.

## Description

The present invention relates to a circuit for mixing video signals and OSD signals (On Screen Display) to be displayed at the same time on a single screen.

The main purpose of known OSD mixers is to integrate some characters, for example a menu system, into existing video signals. Therefore, the display unit displays a picture with characters superimposed on it. Further such OSD mixers are also capable of displaying only OSD information without any picture present in the background. The field of application of such OSD mixers is in the area of VCRs and TV sets.

Known OSD mixers encounter the problem that when an OSD information and a video picture are displayed on a single screen, it cannot always be ensured, that both signals are displayed with the same brightness, which can be unconvenient for an observer. Such a common brightness can be realized if the OSD signal and the video signal are forced to have the same DC voltage value.

It is therefore an object of the present invention to provide a circuit for mixing video and OSD signals, which provides the OSD signal and the video signal with the same DC voltage level.

This object is solved by the subject matter according to claim 1. Preferred embodiments of the invention are subject of the dependent claims.

The present invention comprises a circuit for mixing video and OSD signals to be displayed on a single screen, characterized in that the circuit comprises a clamping circuit, which clamps both signals to a common predetermined reference DC voltage.

Further the clamping circuit comprises a voltage divider consisting of a pair of resistors, a capacitor and two diodes. The switching between the video signals and the OSD signals can be performed by an analogue switch. Preferably such an analogue switch is formed by a high speed CMOS and is controlled by a logic means.

Further the position for inserting the OSD characters is determined by control signals, which are input to the analogue switch.

The invention presents a simple circuit for a display of OSD signals and video signals at the same time on a common screen with the same brightness. The clamping circuit does not necessarily need to be realized by the above described combination of components, but instead any other available clamping circuit can be used.

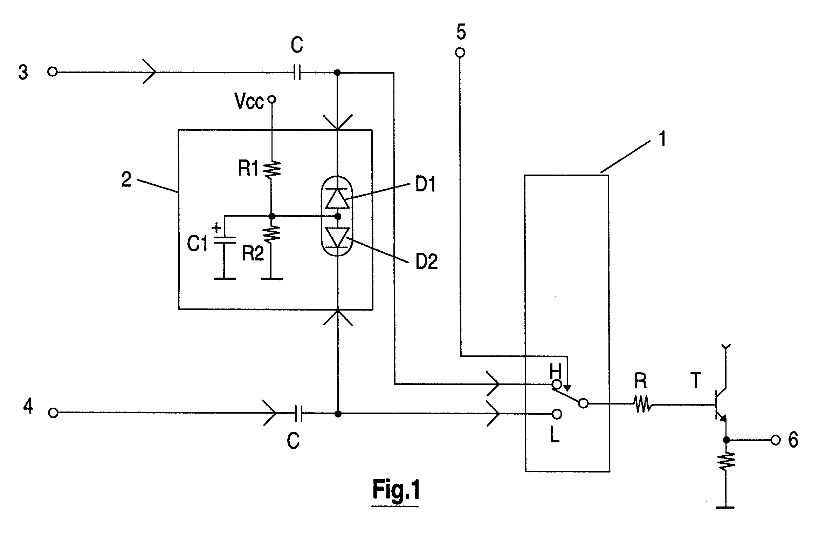

A preferred embodiment of the invention will now be described with reference to the accompanying Fig. 1 which shows a preferred embodiment of a circuit schematics of an OSD mixer.

Fig. 1 shows an OSD mixer with an analogue switch 1, and a clamping circuit 2, which is located between the video signal line 3 and the OSD signal line 4.

In the following description, preferred values of used components are given in brackets. It may be emphasized that the invention is not restricted to components with the preferred values.

In both video signal line 3 and OSD signal line 4, a capacitor C (10 µF) is provided before the clamping circuit 2 clamps both lines 3, 4 to a common DC level. The analogue switch 1 is controlled by a logic control signal 5, which is generated in some logic circuitry (not shown) like a microprocessor. The logic signal 5 determines whether the switch of the analogue switch 1 is connected to the video signal line 3 or the OSD signal line 4, which are both input to the analogue switch 1. The analogue switch 1 is normally realized as a high speed CMOS analogue switch, like for example the 74HC4053. The clamping circuit 2 is realized by a voltage divider consisting of resistors R1 (3.3 kOhms), R2 (3.9 kOhms) wherein R2 is connected to ground and R1 is connected to a supply voltage Vcc (+ 5 V), a capacitor C1 (100 µF), and two diodes D1, D2 (1SS181).

### Reference number list

- 1 -: analogue switch (mixer)
- 2 -: clamping circuit
- 3 -: video signal
- 4 -: OSD signal
- 5 -: logic control signal
- 6 -: output line
- R -: resistor
- T -: transistor
- D1 -: diode
- D2 -: diode
- R1 -: resistor
- R2 -: resistor
- C1 -: capacitor
- C -: capacitor

## Claims

1. Circuit for mixing video signals (3) and OSD signals (4) to be displayed on a single screen,
characterized in that
the circuit comprises a clamping circuit (2), which clamps both signals (3, 4) to a common predetermined reference DC voltage.

2. Circuit according to claim 1, wherein the clamping circuit (2) comprises a voltage divider consisting of a pair of resistors (R1, R2), a capacitor (C1), and two diodes (D1, D2).

3. Circuit according to claim 1 or 2, further comprising an analogue switch (1) for switching between video signals (3) and OSD signals (4).

4. Circuit according to any of the preceding claims, wherein the analogue switch (1) is formed by a high speed CMOS.

5. Circuit according to any of the preceding claims, wherein the analogue switch (1) is controlled by a logic means.

6. Circuit according to any of the preceding claims, wherein the position for inserting the OSD characters is determined by control signals (5), which are input to the analogue switch (1).
